# EUROPEAN PATENT APPLICATION

(11) **EP 3 477 734 A1**
(43) Date of publication of application: **01.05.2019**
(21) Application number: 17833515.4
(22) Date of filing: 24.07.2017
(51) Int. Cl.: H01M 2/12

(54) **COMPOSITE EXPLOSION-PROOF VALVE, COVER PLATE ASSEMBLY, AND BATTERY**

(30) Priority: 29.07.2016 CN 201610608323; 29.07.2016 CN 201620818869 U
(71) Applicant: BYD Company Limited, Shenzhen, Guangdong 518118 (CN)
(72) Inventor: JIANG, Luxia, Shenzhen Guangdong 518118 (CN); HU, Shichao, Shenzhen Guangdong 518118 (CN); YANG, Keli, Shenzhen Guangdong 518118 (CN); CHENG, Han, Shenzhen Guangdong 518118 (CN); ZHU, Jianhua, Shenzhen Guangdong 518118 (CN); ZHU, Yan, Shenzhen Guangdong 518118 (CN)
(74) Representative: Hoffmann Eitle
(86) International application number: PCT/CN2017/094177
(87) International publication number: WO 2018/019212

(57) **Abstract**

The present disclosure provides a compound explosion-proof valve mounted on a battery cover plate assembly, a cover plate assembly containing the explosion-proof valve, and a battery. The compound explosion-proof valve includes at least two layers of explosion-proof membranes and a flame-retardant structure located between the at least two layers of explosion-proof membranes. When the battery (such as internal temperature or internal pressure) is abnormal, the first layer of explosion-proof membrane is opened; under the action of the flame-retardant structure, the compound explosion-proof valve is in a local oxygen-deficient state, and it is difficult for a high-temperature combustible matter ejected from the battery to ignite under the local oxygen-deficient condition; therefore, the compound explosion-proof valve is capable of reliving pressure in time when the battery is abnormal and effectively isolating external oxygen from entering, thereby preventing occurrence of battery combustion and explosion and avoiding secondary disasters and larger abnormity.

## Description

### FIELD

The present disclosure relates to the field of batteries, and particularly relates to a compound explosion-proof valve mounted on a battery cover plate assembly, a cover plate assembly containing the explosion-proof valve, and a battery.

### BACKGROUND

With the gradual development of science and technology, batteries are widely applied to vehicles, energy storage devices, electronic products and other devices, and furthermore, more and more people pay attention to the safety of the batteries. When a battery has a fault and a large amount of combustible gas is produced in the battery, the internal gas pressure of the battery significantly increases, and if measures are not taken in time, explosion of the battery may be caused.

Therefore, to prevent occurrence of battery explosion, generally, a pressure-controlled explosion-proof valve (or referred to as safety valve) is mounted on a battery cover plate. The existing pressure-controlled explosion-proof valve generally includes one or more layers of pressure-controlled explosion-proof membranes. When the internal gas pressure of the battery exceeds an opening pressure of the explosion-proof valve, the explosion-proof valve is opened to release the combustible gas inside the battery so as to prevent battery explosion. However, in battery research, development and production processes, the inventor of the present disclosure finds that for some batteries with the pressure-controlled explosion-proof valve structure, especially for a lithium ion battery of a ternary positive electrode material, when an internal temperature of the battery reaches a thermal runaway temperature of the positive electrode material of the battery, the battery is out of control, but the internal pressure of the battery is still smaller, and the pressure-controlled explosion-proof valve cannot be started; then, after 3-5 seconds of temperature rise, the temperature rises rapidly, and the internal pressure rises rapidly; at this moment, although the pressure-controlled explosion-proof valve with one or more layers of pressure-controlled explosion-proof membranes is arranged, a large amount of combustible gas produced inside the battery is rapidly ejected from the pressure-controlled explosion-proof valve, and the risk of battery combustion or explosion still exists.

### SUMMARY

The present disclosure aims to resolve at least one of the technical problems existing in the prior art. Therefore, the present disclosure provides a compound explosion-proof valve, a cover plate assembly, and a battery.

A first aspect of the present disclosure provides a compound explosion-proof valve, including at least two layers of explosion-proof membranes and a flame-retardant structure located between the at least two layers of explosion-proof membranes.

Further, the compound explosion-proof valve further includes a base body; the base body is provided with a pressure relief hole, and the at least two layers of explosion-proof membranes are respectively mounted at two ends of the pressure relief hole; and the flame-retardant structure is arranged in the pressure relief hole between the at least two layers of explosion-proof membranes.

Further, the explosion-proof membrane is a pressure-controlled explosion-proof membrane.

Further, an opening pressure of the pressure-controlled explosion-proof membrane is 0.1-2 MPa.

Further, the opening pressure of the pressure-controlled explosion-proof membrane is 0.2-0.8 MPa.

Further, the explosion-proof membrane is a temperature-controlled explosion-proof membrane.

Further, an opening temperature of the temperature-controlled explosion-proof membrane is 100-200 °C.

Further, the opening temperature of the temperature-controlled explosion-proof membrane is 100-150 °C.

Further, the at least two layers of explosion-proof membranes include a pressure-controlled explosion-proof membrane mounted at an outer end of the pressure relief hole and a temperature-controlled explosion-proof membrane mounted at an inner end of the pressure relief hole.

Further, the at least two layers of explosion-proof membranes include a pressure-controlled explosion-proof membrane mounted at an inner end of the pressure relief hole and a temperature-controlled explosion-proof membrane mounted at an outer end of the pressure relief hole.

Further, a stepped bottom mounting step is formed at a lower end of the base body, and one layer of explosion-proof membrane is mounted in the bottom mounting step; and a stepped top mounting step is formed at an upper end of the base body, and the other layer of explosion-proof membrane is mounted in the top mounting step.

Further, a mounting part is formed at a peripheral edge of the temperature-controlled explosion-proof membrane, a framework is embedded in the mounting part, and a central part of the temperature-controlled explosion-proof membrane is provided with an opening region.

Further, the opening region is integrally press-thinned or gradually thinned relative to the mounting part.

Further, a material of the temperature-controlled explosion-proof membrane is a non-metal material.

Further, the material of the temperature-controlled explosion-proof membrane is one of PP, PE, PPO, PET, or PVDF.

Further, the framework is a carbon fiber framework or a memory alloy framework.

Further, a thickness of the mounting part of the temperature-controlled explosion-proof membrane is 0.2-5 mm.

Further, a thickness of the mounting part of the temperature-controlled explosion-proof membrane is 0.5-2 mm.

Further, the opening region of the temperature-controlled explosion-proof membrane is in a cross shape, a thickness of the opening region is 0.02-3 mm, and a width of the opening region is 0.3-10 mm.

Further, the thickness of the opening region of the temperature-controlled explosion-proof membrane is 0.05-0.15 mm, and the width of the opening region is 1-5 mm.

Further, an inner part of the flame-retardant structure includes a gap.

Further, the flame-retardant structure contains a flame-retardant agent.

Further, the flame-retardant agent is in a form of solid powder, and the flame-retardant structure is formed by compressing and ramming the flame-retardant agent in the form of solid powder.

Further, the flame-retardant structure is a microcapsule containing the flame-retardant agent.

Further, the flame-retardant agent is configured as an organic flame-retardant agent, an inorganic flame-retardant agent, or a mixed flame-retardant agent formed by mixing the inorganic flame-retardant agent with the organic flame-retardant agent.

Further, the organic flame-retardant agent includes one or more of a halogen-based flame-retardant agent, a phosphorus-based flame-retardant agent, a nitrogen-based flame-retardant agent, and a phosphorus-halogen-based flame-retardant agent.

Further, the inorganic flame-retardant agent includes one or more of antimonous oxide, magnesium hydroxide, aluminum hydroxide, or silicon-based oxide.

Further, the mixed flame-retardant agent includes red phosphorus, aluminum hydroxide, and expanded graphite.

Further, the explosion-proof membrane is a pressure-controlled explosion-proof membrane, the pressure-controlled explosion-proof membrane includes a welding parts at a peripheral edge and a pressure opening part in the middle, and the welding part is welded in the top mounting step.

Further, the pressure opening part of the pressure-controlled explosion-proof membrane is provided with an explosion-proof notch.

Further, the pressure opening part of the pressure-controlled explosion-proof membrane is further provided with a flexible buffer structure, so that cracking or breaking of the explosion-proof notch caused by shrinkage of two sides of a welding seam during laser welding can be effectively avoided so as to ensure a finished product ratio of the explosion-proof valve in a manufacturing process. Furthermore, by adopting the above flexible buffer structure, the uniformity and reliability of the starting pressure of the explosion-proof valve can be greatly improved, and the fatigue resistance of the explosion-proof valve can also be well improved.

Further, the flexible buffer structure is arranged between a welding seam between the welding part and the top mounting step and the explosion-proof notch.

Further, the flexible buffer structure is annular.

Further, the flexible buffer structure includes one or more wave crests and/or wave troughs.

Further, the flexible buffer structure includes one wave crest and one wave trough.

A second aspect of the present disclosure further provides a cover plate assembly, including a cover plate body, and a compound explosion-proof valve is mounted on the cover plate body.

A third aspect of the present disclosure provides a battery, including a shell, an electrode core and a cover plate assembly, the cover plate assembly and the shell form a sealed space, and the electrode core is mounted in the sealed space.

According to the battery, the cover plate assembly, and the compound explosion-proof valve provided by the present disclosure, the cover plate assembly of the battery is provided with the improved compound explosion-proof valve of the present disclosure; because at least two layers of explosion-proof membranes are mounted on the compound explosion-proof valve and the flame-retardant structure is arranged between the at least two layers of explosion-proof membranes, when the battery (such as internal temperature or internal pressure) is abnormal, the first layer of explosion-proof membrane is opened; under the action of the flame-retardant structure, the compound explosion-proof valve is in a local oxygen-deficient state, and it is difficult for a high-temperature combustible matter ejected from the battery to ignite under the local oxygen-deficient condition; therefore, the compound explosion-proof valve is capable of reliving pressure in time when the battery is abnormal and effectively isolating external oxygen from entering, thereby preventing occurrence of battery combustion and explosion and avoiding secondary disasters and larger abnormity.

### BRIEF DESCRIPTION OF THE DRAWINGS

Fig. 1 is a three-dimensional schematic diagram of a battery provided in one specific embodiment of the present disclosure.
Fig. 2 is a cross-sectional view of a compound explosion-proof valve provided in one specific embodiment of the present disclosure.
Fig. 3 is a top view of a compound explosion-proof valve provided in one specific embodiment of the present disclosure.
Fig. 4 is a cross-sectional view of a compound explosion-proof valve provided in another specific embodiment of the present disclosure.
Fig. 5 is a cross-sectional view of a base body of a compound explosion-proof valve provided in one specific embodiment of the present disclosure.
Fig. 6 is a cross-sectional view of a compound explosion-proof valve provided in another specific embodiment of the present disclosure.

In the figures, 1. cover plate body; 2. shell; 3. first electrode assembly; 4. second electrode assembly; 5. liquid injection hole cover; 6. compound explosion-proof valve; 60. base body; 61. first layer of explosion-proof membrane; 62. second layer of explosion-proof membrane; 63. flame-retardant structure; 601. base part; 602. lug boss part; 603. pressure relief hole; 604. top mounting step; 605. bottom mounting step; 610. welding part; 611. pressure opening part; 612. explosion-proof notch; 613. wave trough; 614. wave crest; 615. welding seam; 621. opening region; 622. mounting part; and 623. framework.

### DETAILED DESCRIPTION

To make the technical problems to be solved by the present invention, technical solutions, and beneficial effects more comprehensible, the following further describes the present invention in detail with reference to the accompanying drawings and embodiments. It should be understood that the specific embodiments described herein are merely used for explaining the present disclosure instead of limiting the present disclosure.

A battery, a cover plate assembly, and a compound explosion-proof valve 6 provided by the present disclosure are specifically explained below.

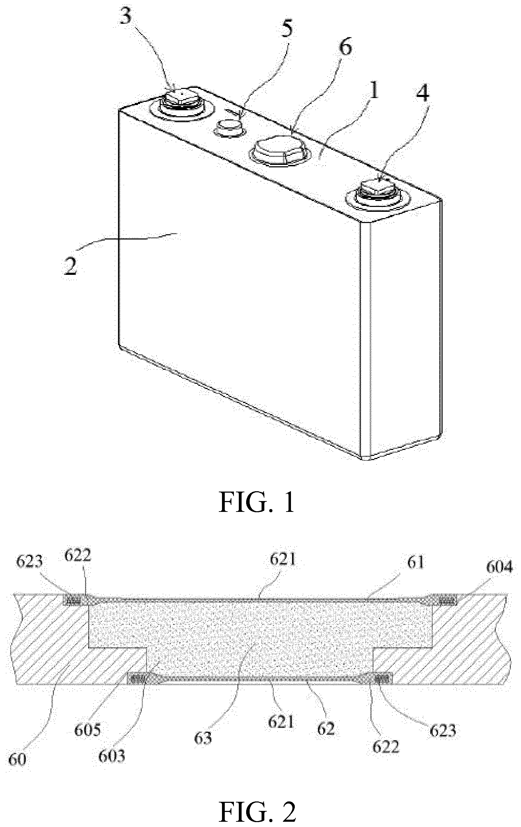

As shown in Fig. 1, the present embodiment discloses a battery. The battery includes a shell 2, an electrode core, and a cover plate assembly, where the cover plate assembly and the shell 2 form a sealed space, and the electrode core is mounted in the sealed space. The battery in the present embodiment may be a lithium ion battery or may be another type of nickel battery or the like. The electrode core is formed by winding or superposing a positive electrode sheet, a diaphragm and a negative electrode sheet, which is known to the public. The cover plate assembly includes a cover plate body 1, and a compound explosion-proof valve 6 is mounted on the cover plate body 1. Generally, a first electrode assembly 3 and a second electrode assembly 4 which are different in polarity are further mounted on the cover plate assembly in an insulated mode. Generally, the first electrode assembly 3 includes a first electrode, a first insulating part, and the like, and the first electrode and the cover plate body 1 are insulated by the first insulating part. Generally, the second electrode assembly 4 includes a second electrode, a second insulating part, and the like, and the second electrode and the cover plate body 1 are insulated by the second insulating part. When the first electrode is a positive electrode, the second electrode is a negative electrode; and otherwise, when the first electrode is a negative electrode, the second electrode is a positive electrode. The positive electrode is electrically connected to the positive electrode sheet of the electrode core, and the negative electrode is electrically connected to the negative electrode sheet of the electrode core. Generally, the cover plate body 1 is further provided with a liquid injection hole, and a liquid injection hole cover 5 covers the liquid injection hole.

Because the present disclosure does not improve the structure other than the compound explosion-proof valve 6 on the cover plate assembly of the battery, only the structure of the compound explosion-proof valve 6 is specifically explained below.

As shown in Fig. 2 and Fig. 4 to Fig. 6, the compound explosion-proof valve 6 provided by the present embodiment includes a base body 60, a first layer of explosion-proof membrane 61, and a second layer of explosion-proof membrane 62; the base body 60 is provided with a pressure relief hole 603, and the second layer of explosion-proof membrane 62 and the first layer of explosion-proof membrane 61 are respectively mounted at two ends of the pressure relief hole 603; the first layer of explosion-proof membrane 61 is mounted at an outer end of the pressure relief hole 603, and the second layer of explosion-proof membrane 62 is mounted at an inner end of the pressure relief hole 603; and a flame-retardant structure 63 is arranged in the pressure relief hole 603 between the second layer of explosion-proof membrane 62 and the first layer of explosion-proof membrane 61.

The base body 60 is configured to be welded with the cover plate body 1 (or the base body 60 may be mounted on the shell 2, and in the present embodiment, the base body 60 is mounted on the cover plate body 1 selectively), or the base body 60 may be subjected to integral punch forming with the cover plate body 1 to serve as a part of the cover plate body 1, namely, the base body 60 may be a structure independent of the cover plate body 1 or the shell 2, or may be integrally formed with the cover plate body 1 or the shell 2, in other words, the base body 60 of the compound explosion-proof valve 6 is formed as a part of the cover plate body 1 or the shell 2.

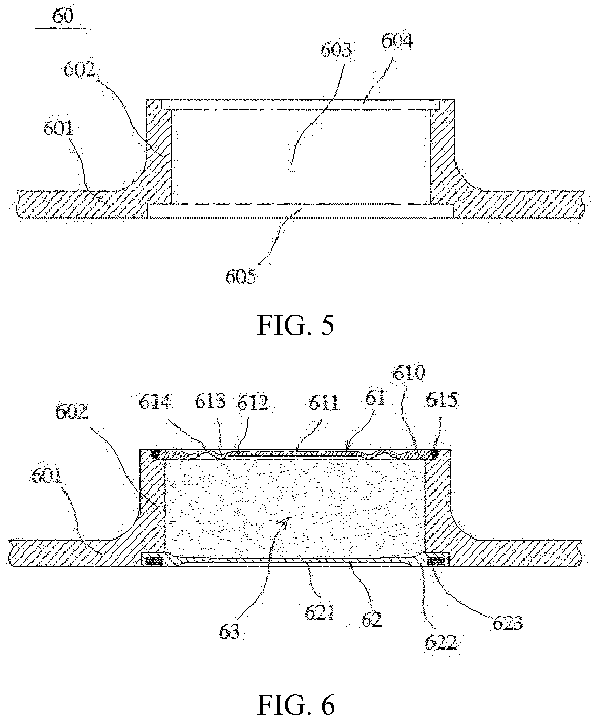

In some embodiments of the present disclosure, as shown in Fig. 5 and Fig. 6, the base body 60 includes a base part 601 and a lug boss part 602 protruding from the base part 601, and the pressure relief hole 603 is formed by upwards stretching from the center of the base part 601 to penetrate through the lug boss part 602. The base part 601 is configured to be welded with the cover plate body 1 (or the base part 601 may be mounted on the shell 2, and in the present embodiment, the base part 601 is mounted on the cover plate body 1 selectively), or the base part 601 may be subjected to integral punch forming with the cover plate body 1 to serve as a part of the cover plate body 1, namely, the base part 601 may be a structure independent of the cover plate body 1 or the shell 2, or may be integrally formed with the cover plate body 1 or the shell 2, in other words, the base part 601 of the compound explosion-proof valve 6 may be formed as a part of the cover plate body 1 or the shell 2.

The first layer of explosion-proof membrane 61 and the second layer of explosion-proof membrane 62 may be a pressure-controlled explosion-proof membrane or a temperature-controlled explosion-proof membrane respectively, namely, both the first layer of explosion-proof membrane 61 and the second layer of explosion-proof membrane 62 may be pressure-controlled explosion-proof membranes; both the first layer of explosion-proof membrane 61 and the second layer of explosion-proof membrane 62 may be temperature-controlled explosion-proof membranes; the first layer of explosion-proof membrane 61 may be a pressure-controlled explosion-proof membrane, and the second layer of explosion-proof membrane 62 may be a temperature-controlled explosion-proof membrane; or the second layer of explosion-proof membrane 62 may be a pressure-controlled explosion-proof membrane, and the first layer of explosion-proof membrane 61 may be a temperature-controlled explosion-proof membrane.

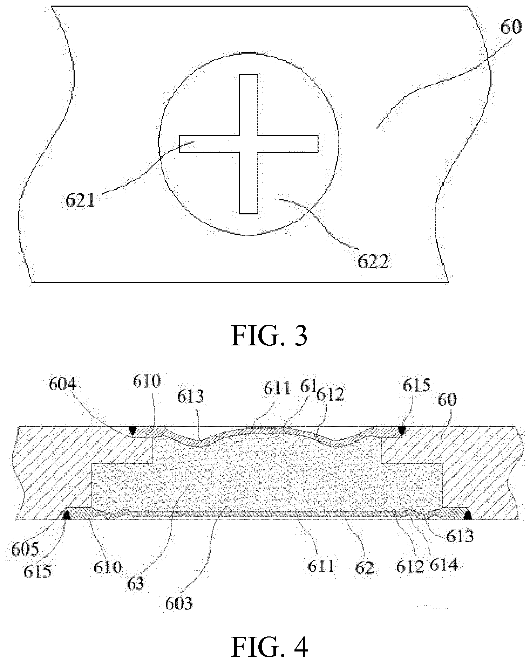

For example, as shown in Fig. 2, both the first layer of explosion-proof membrane 61 mounted at the outer end of the pressure relief hole 603 and the second layer of explosion-proof membrane 62 mounted at the inner end of the pressure relief hole 603 are temperature-controlled explosion-proof membranes. As shown in Fig. 4, both the first layer of explosion-proof membrane 61 mounted at the outer end of the pressure relief hole 603 and the second layer of explosion-proof membrane 62 mounted at the inner end of the pressure relief hole 603 are pressure-controlled explosion-proof membranes. As shown in Fig. 6, a pressure-controlled explosion-proof membrane is mounted at the outer end of the pressure relief hole 603, and a temperature-controlled explosion-proof membrane is mounted at the inner end of the pressure relief hole 603.

An opening temperature of the temperature-controlled explosion-proof membrane is 100-200 °C. The opening temperature refers to a temperature at which the temperature-controlled explosion-proof membrane is heated and opened. When the temperature-controlled explosion-proof membrane is heated and the temperature reaches the opening temperature, the temperature-controlled explosion-proof membrane is opened. The opening temperature is lower than a thermal runaway temperature of a positive electrode material of the battery. The thermal runaway temperature of the positive electrode material of an existing lithium ion battery is 200-600 °C generally. Tests show that the effect is optimal when the opening temperature of the temperature-controlled explosion-proof membrane is 100-150 °C, and in the temperature range, the temperature-controlled explosion-proof membrane can not be opened in advance and can be ensured to be opened before thermal runaway of the positive electrode material of the battery.

Specifically, as shown in Fig. 2 and Fig. 6, mounting parts 622 are formed at peripheral edges of the temperature-controlled explosion-proof membrane, a framework 623 is embedded in the mounting part 622, and a central part of the temperature-controlled explosion-proof membrane is provided with an opening region 621. The framework 623 is configured to support and fix the temperature-controlled explosion-proof membrane, and the framework 623 is a carbon fiber framework or a memory alloy framework. The framework 623 may be injection-molded in the base body 60 of the temperature-controlled explosion-proof membrane in a mode of injection molding, or the peripheral edge of the temperature-controlled explosion-proof membrane is overturned and covered to wrap and fix the framework 623 on the mounting part 622.

Specifically, the temperature-controlled explosion-proof membrane may be mounted in modes of gluing, crimping, welding, or the like. In this way, when the temperature is excessively high, the temperature-controlled explosion-proof membrane is heated to shrink, the opening region 621 is first pulled apart while the internal temperature rises, and then the mounting part 622 further shrinks by taking the framework 623 as a fixed point to enlarge an exhaust opening, so as to realize the function of opening the temperature-controlled explosion-proof membrane by heating.

The opening region 621 is integrally press-thinned or gradually thinned relative to the mounting part 622. The opening region 621 may be formed in a cross shape as shown in Fig. 3, or may be in a straight shape or any other suitable shape.

A material of the temperature-controlled explosion-proof membrane is not specifically limited as long as the material is resistant to corrosion, is influenced by temperature and may be heated to shrink so as to open the temperature-controlled explosion-proof membrane when the temperature exceeds a preset temperature. In the present embodiment, a material of the temperature-controlled explosion-proof membrane is a non-metal material. For example, the material of the temperature-controlled explosion-proof membrane is one of PP (Polypropylene), PE (Polyethylene), PPO (Polyphenylene Oxide), PET (Polyethylene Terephthalate), or PVDF (Polyvinylidene Fluoride).

The thickness of the mounting part 622 of the temperature-controlled explosion-proof membrane is 0.2-5 mm. Preferably, the thickness of the mounting part 622 of the temperature-controlled explosion-proof membrane is 0.5-2 mm.

A thickness of the opening region 621 of the temperature-controlled explosion-proof membrane is 0.02-3 mm, and a width of the opening region 621 is 0.3-10 mm. In a preferred implementation, the thickness of the opening region 621 of the temperature-controlled explosion-proof membrane is 0.05-0.15 mm, and a width of the cross shape in a preferred embodiment is 1-5 mm.

A preferred opening pressure of the pressure-controlled explosion-proof membrane is 0.1-2 MPa. The opening pressure refers to a pressure at which the pressure-controlled explosion-proof membrane is pressed and opened; when the internal pressure of the battery is greater than the opening pressure, the pressure-controlled explosion-proof membrane is opened; and preferably, the opening pressure of the pressure-controlled explosion-proof membrane is 0.2-0.8 MPa.

As shown in Fig. 4 and Fig. 6, the pressure-controlled explosion-proof membrane includes welding parts 610 at peripheral edges and a pressure opening part 611 in the middle, and the welding part 610 is welded on the base body 60. The pressure opening part 611 of the pressure-controlled explosion-proof membrane is provided with explosion-proof notches 612. A welding seam 615 is formed between the welding part 610 and the base body 60, and the welding seam 615 is filled with welding flux to weld the pressure-controlled explosion-proof membrane on the base body 60.

As shown in Fig. 2 and Fig. 4 to Fig. 6, in some embodiments of the present disclosure, a stepped bottom mounting step 605 is formed at a lower end of the base body 60, and one layer of explosion-proof membrane is mounted in the bottom mounting step 605; and a stepped top mounting step 604 is formed at an upper end of the base body 60, and the other layer of explosion-proof membrane is mounted in the top mounting step 604.

A material of the pressure-controlled explosion-proof membrane may be an aluminum foil well known by those skilled in the art, or may be another material well known by those skilled in the art.

Because the pressure-controlled explosion-proof membrane is mounted on the base body 60 in a mode of welding, when the pressure-controlled explosion-proof membrane is tightly tensioned, the pressure-controlled explosion-proof membrane is easily damaged in a welding process. Therefore, preferably, the pressure opening part 611 of the pressure-controlled explosion-proof membrane is also provided with a flexible buffer structure. The flexible buffer structure may effectively avoid cracking or breaking of the explosion-proof notches 612 caused by shrinkage of two sides of the welding seam 615 during laser welding, so as to ensure the finished product ratio of the explosion-proof valve in a manufacturing process. Furthermore, by adopting the above flexible buffer structure, the uniformity and reliability of the starting pressure of the pressure-controlled explosion-proof membrane may be greatly improved, and the fatigue resistance of the pressure-controlled explosion-proof membrane can also be well improved.

The flexible buffer structure is arranged between the welding seam 615 and the explosion-proof notch 612.

Specifically, the flexible buffer structure is annular. The flexible buffer structure is not specifically limited in structure, and the flexible buffer structure may include one or more wave crests 614 and/or wave troughs 613. Specifically, in the present embodiment, the flexible buffer structure includes one wave crest 614 and one wave trough 613.

A thickness of the welding part 610 of the pressure-controlled explosion-proof membrane is 0.2-0.8 mm, and a thickness of the pressure opening part 611 of the pressure-controlled explosion-proof membrane is 0.05-0.15 mm.

A height difference between the wave crest 614 and the wave trough 613 and a surface of the pressure opening part is 1-8 times the thickness of the pressure opening part 611. The height difference herein refers to a distance between the highest point of the wave crest 614 and an upper surface of the pressure opening part 611 and a distance between the lowest point of the wave trough 613 and a lower surface of the pressure opening part 611.

The specific structure and material of the flame-retardant structure 63 are not specifically limited as long as the structure and the material may ensure that internal combustible gas leaks out through the flame-retardant structure 63 in time and the flame-retardant structure 63 can form an oxygen-deficient state, so as to prevent external oxygen gas from entering. For example, an inner part of the flame-retardant structure 63 includes a gap (or hole) and the like, so that under the condition that the internal pressure is larger, the combustible gas inside the battery may leak out through the gap in time, and oxygen gas difficultly enters the battery through the gap.

The flame-retardant structure 63 contains a flame-retardant agent. The flame-retardant agent may be in a form of solid powder, and the flame-retardant structure 63 is formed by compressing and ramming the flame-retardant agent in the form of solid powder. Alternatively, the flame-retardant structure is a microcapsule containing the flame-retardant agent. The flame-retardant agent may be configured as an organic flame-retardant agent, an inorganic flame-retardant agent, or a mixed flame-retardant agent formed by mixing the inorganic flame-retardant agent with the organic flame-retardant agent. The organic flame-retardant agent includes one or more of a halogen-based flame-retardant agent, a phosphorus-based flame-retardant agent, a nitrogen-based flame-retardant agent, and a phosphorus-halogen-based flame-retardant agent. The inorganic flame-retardant agent includes one or more of antimonous oxide, magnesium hydroxide, aluminum hydroxide, or silicon-based oxide. The mixed flame-retardant agent is formed by mixing the organic flame-retardant agent with the inorganic flame-retardant agent. For example, the present embodiment provides an improved mixed flame-retardant agent, and the mixed flame-retardant agent includes red phosphorus, aluminum hydroxide, and expanded graphite.

As shown in Fig. 2, in the present embodiment, both the first layer of explosion-proof membrane 61 mounted at the outer end of the pressure relief hole 603 and the second layer of explosion-proof membrane 62 mounted at the inner end of the pressure relief hole 603 are temperature-controlled explosion-proof membranes. Specifically, the stepped bottom mounting step 605 is formed at the lower end of the base body 60, and one layer of the temperature-controlled explosion-proof membrane is mounted in the bottom mounting step 605; and the stepped top mounting step 604 is formed at the upper end of the base body 60, and the other layer of temperature-controlled explosion-proof membrane is mounted in the top mounting step 604. A working principle of the battery with the compound explosion-proof valve 6 and provided by the present embodiment is described as follows: When the temperature rises due to abnormity inside the battery and combustible gas is produced inside the battery, and when the temperature rises to the opening temperature of the temperature-controlled explosion-proof membrane, the temperature-controlled explosion-proof valve is heated to shrink, the opening region 621 is first pulled apart, and then the mounting part 622 further shrinks by taking the framework 623 as the fixed point to enlarge the exhaust opening, so as to realize the function of opening the temperature-controlled explosion-proof membrane by heating. Because of the existence of the flame-retardant structure 63, a flame-retardant function is realized at the compound explosion-proof valve 6 to isolate external oxygen gas from entering the battery, thereby effectively preventing occurrence of battery combustion and explosion accidents.

As shown in Fig. 4, in the present embodiment, both the first layer of explosion-proof membrane 61 mounted at the outer end of the pressure relief hole 603 and the second layer of explosion-proof membrane 62 mounted at the inner end of the pressure relief hole 603 are pressure-controlled explosion-proof membranes. Specifically, the stepped bottom mounting step 605 is formed at the lower end of the base body 60, and one layer of the pressure-controlled explosion-proof membrane is mounted in the bottom mounting step 605; and the stepped top mounting step 604 is formed at the upper end of the base body 60, and the other layer of pressure-controlled explosion-proof membrane is mounted in the top mounting step 604. A working principle of the battery with the compound explosion-proof valve 6 and provided by the present embodiment is described as follows: When the pressure rises due to abnormity inside the battery and the internal gas pressure increases to the opening pressure of the pressure-controlled explosion-proof membrane, the pressure-controlled explosion-proof membrane is opened from the explosion-proof notch 612. At this moment, because of the existence of the flame-retardant structure 63, the flame-retardant function is realized at the compound explosion-proof valve 6 to isolate external oxygen gas from entering the battery, thereby effectively preventing occurrence of battery combustion and explosion accidents.

As shown in Fig. 6, in the present embodiment, the first layer of explosion-proof membrane 61 mounted at the outer end of the pressure relief hole 603 is a pressure-controlled explosion-proof membrane, and the second layer of explosion-proof membrane 62 mounted at the inner end of the pressure relief hole 603 is a temperature-controlled explosion-proof membrane. Specifically, the stepped bottom mounting step 605 is formed at the lower end of the base body 60, and the temperature-controlled explosion-proof membrane is mounted in the bottom mounting step 605; and the stepped top mounting step 604 is formed at the upper end of the base body 60, and the pressure-controlled explosion-proof membrane is mounted in the top mounting step 604. The welding part 610 is welded in the top mounting step 604, the welding seam 615 is formed between the welding part 610 and the top mounting step 604, and the welding seam 615 is filled with the welding flux to weld the pressure-controlled explosion-proof membrane 61 on the top mounting step 604. A working principle of the battery with the compound explosion-proof valve 6 and provided by the present embodiment is described as follows: When the temperature rises due to abnormity inside the battery and combustible gas is produced inside the battery, and when the temperature rises to the opening temperature of the temperature-controlled explosion-proof membrane, the temperature-controlled explosion-proof membrane is heated to shrink, the opening region 621 is first pulled apart while the internal temperature rises, and then the mounting part 622 further shrinks by taking the framework 623 as a fixed point to enlarge the exhaust opening, so as to realize the function of opening the temperature-controlled explosion-proof membrane by heating. At this moment, the internal positive electrode material is not out of control, after 3-5 seconds, the internal temperature of the battery significantly rises, the internal gas pressure further increases, and when the internal gas pressure increases to the opening pressure of the pressure-controlled explosion-proof membrane, the pressure-controlled explosion-proof membrane is opened from the explosion-proof notch 612. At this moment, because of the existence of the flame-retardant structure 63, a flame-retardant function is realized at the compound explosion-proof valve 6 to isolate external oxygen gas from entering the battery, thereby effectively preventing occurrence of battery combustion and explosion accidents.

As a preferable mode, the compound explosion-proof valve 6 further includes a valve cover (not marked in the figures), and the valve cover is mounted on the base body 60 to be used for preventing the compound explosion-proof valve 6 from being damaged by an external force.

According to the battery, the cover plate assembly, and the compound explosion-proof valve 6 provided by the present disclosure, the cover plate assembly of the battery is provided with the improved compound explosion-proof valve 6 of the present disclosure; because at least two layers of explosion-proof membranes are mounted on the compound explosion-proof valve 6 and the flame-retardant structure 63 is arranged between the two layers of explosion-proof membranes, when the battery is abnormal, the explosion-proof membrane is opened; under the action of the flame-retardant structure 63, the compound explosion-proof valve 6 is in a local oxygen-deficient state, and it is difficult for a high-temperature combustible matter ejected from the battery to ignite under the local oxygen-deficient condition; therefore, the compound explosion-proof valve is capable of relieving pressure in time when the battery is abnormal and effectively isolating external oxygen from entering, thereby preventing occurrence of battery combustion and explosion and avoiding secondary disasters and larger abnormity.

The foregoing descriptions are merely preferred embodiments of the present disclosure, but are not intended to limit the present disclosure. Any modification, equivalent replacement, or improvement made within the spirit and principle of the present disclosure shall fall within the protection scope of the present disclosure.

## Claims

1. A compound explosion-proof valve, comprising at least two layers of explosion-proof membranes and a flame-retardant structure located between the at least two layers of explosion-proof membranes.

2. The compound explosion-proof valve according to claim 1, further comprising a base body, wherein the base body is provided with a pressure relief hole, and the at least two layers of explosion-proof membranes are respectively mounted at two ends of the pressure relief hole; and the flame-retardant structure is arranged in the pressure relief hole between the at least two layers of explosion-proof membranes.

3. The compound explosion-proof valve according to claim 1, wherein the explosion-proof membrane is a pressure-controlled explosion-proof membrane.

4. The compound explosion-proof valve according to claim 3, wherein an opening pressure of the pressure-controlled explosion-proof membrane is 0.1-2 MPa.

5. The compound explosion-proof valve according to claim 4, wherein the opening pressure of the pressure-controlled explosion-proof membrane is 0.2-0.8 MPa.

6. The compound explosion-proof valve according to claim 1, wherein the explosion-proof membrane is a temperature-controlled explosion-proof membrane.

7. The compound explosion-proof valve according to claim 6, wherein an opening temperature of the temperature-controlled explosion-proof membrane is 100-200 °C.

8. The compound explosion-proof valve according to claim 7, wherein the opening temperature of the temperature-controlled explosion-proof membrane is 100-150 °C.

9. The compound explosion-proof valve according to claim 2, wherein the at least two layers of explosion-proof membranes comprise a pressure-controlled explosion-proof membrane mounted at an outer end of the pressure relief hole and a temperature-controlled explosion-proof membrane mounted at an inner end of the pressure relief hole.

10. The compound explosion-proof valve according to claim 2, wherein the at least two layers of explosion-proof membranes comprise a pressure-controlled explosion-proof membrane mounted at an inner end of the pressure relief hole and a temperature-controlled explosion-proof membrane mounted at an outer end of the pressure relief hole.

11. The compound explosion-proof valve according to claim 2, wherein a stepped bottom mounting step is formed at a lower end of the base body, and one layer of explosion-proof membrane is mounted in the bottom mounting step; and a stepped top mounting step is formed at an upper end of the base body, and the other layer of explosion-proof membrane is mounted in the top mounting step.

12. The compound explosion-proof valve according to claim 6, wherein a mounting part is formed at a peripheral edge of the temperature-controlled explosion-proof membrane, a framework is embedded in the mounting part, and a central part of the temperature-controlled explosion-proof membrane is provided with an opening region.

13. The compound explosion-proof valve according to claim 12, wherein the opening region is integrally press-thinned or gradually thinned relative to the mounting part.

14. The compound explosion-proof valve according to claim 13, wherein a material of the temperature-controlled explosion-proof membrane is a non-metal material.

15. The compound explosion-proof valve according to claim 14, wherein the material of the temperature-controlled explosion-proof membrane is one of PP, PE, PPO, PET, or PVDF.

16. The compound explosion-proof valve according to claim 15, wherein the framework is a carbon fiber framework or a memory alloy framework.

17. The compound explosion-proof valve according to claim 12, wherein a thickness of the mounting part of the temperature-controlled explosion-proof membrane is 0.2-5 mm.

18. The compound explosion-proof valve according to claim 15, wherein a thickness of the mounting part of the temperature-controlled explosion-proof membrane is 0.5-2 mm.

19. The compound explosion-proof valve according to claim 12, wherein the opening region of the temperature-controlled explosion-proof membrane is in a cross shape, a thickness of the opening region is 0.02-3 mm, and a width of the opening region is 0.3-10 mm.

20. The compound explosion-proof valve according to claim 19, wherein the thickness of the opening region of the temperature-controlled explosion-proof membrane is 0.05-0.15 mm, and the width of the opening region is 1-5 mm.

21. The compound explosion-proof valve according to claim 1, wherein an inner part of the flame-retardant structure comprises a gap.

22. The compound explosion-proof valve according to claim 21, wherein the flame-retardant structure contains a flame-retardant agent.

23. The compound explosion-proof valve according to claim 22, wherein the flame-retardant agent is in a form of solid powder, and the flame-retardant structure is formed by compressing and ramming the flame-retardant agent in the form of solid powder.

24. The compound explosion-proof valve according to claim 22, wherein the flame-retardant structure is a microcapsule containing the flame-retardant agent.

25. The compound explosion-proof valve according to claim 22, wherein the flame-retardant agent is configured as an organic flame-retardant agent, an inorganic flame-retardant agent, or a mixed flame-retardant agent formed by mixing the inorganic flame-retardant agent with the organic flame-retardant agent.

26. The compound explosion-proof valve according to claim 25, wherein the organic flame-retardant agent comprises one or more of a halogen-based flame-retardant agent, a phosphorus-based flame-retardant agent, a nitrogen-based flame-retardant agent, and a phosphorus-halogen-based flame-retardant agent.

27. The compound explosion-proof valve according to claim 25, wherein the inorganic flame-retardant agent comprises one or more of antimonous oxide, magnesium hydroxide, aluminum hydroxide, or silicon-based oxide.

28. The compound explosion-proof valve according to claim 25, wherein the mixed flame-retardant agent comprises red phosphorus, aluminum hydroxide, and expanded graphite.

29. The compound explosion-proof valve according to claim 11, wherein the explosion-proof membrane is a pressure-controlled explosion-proof membrane, the pressure-controlled explosion-proof membrane comprises a welding part at a peripheral edge and a pressure opening part in the middle, and the welding part is welded in the top mounting step.

30. The compound explosion-proof valve according to claim 29, wherein the pressure opening part of the pressure-controlled explosion-proof membrane is provided with an explosion-proof notch.

31. The compound explosion-proof valve according to claim 30, wherein the pressure opening part of the pressure-controlled explosion-proof membrane is further provided with a flexible buffer structure.

32. The compound explosion-proof valve according to claim 31, wherein the flexible buffer structure is arranged between a welding seam between the welding part and the top mounting step and the explosion-proof notch.

33. The compound explosion-proof valve according to claim 32, wherein the flexible buffer structure is annular.

34. The compound explosion-proof valve according to claim 33, wherein the flexible buffer structure comprises one or more wave crests and/or wave troughs.

35. The compound explosion-proof valve according to claim 34, wherein the flexible buffer structure comprises one wave crest and one wave trough.

36. A cover plate assembly, comprising a cover plate body, wherein the compound explosion-proof valve according to any one of claims 1-35 is mounted on the cover plate body.

37. A battery, comprising a shell, an electrode core and a cover plate assembly, wherein the cover plate assembly and the shell form a sealed space, and the electrode core is mounted in the sealed space; and the cover plate assembly is the cover plate assembly according to claim 36.
